(19) Europäisches Patentamt
European Patent Office
Office européen des brevets

(11) **EP 3 728 805 B1**

(12) **FASCICULE DE BREVET EUROPÉEN**

(45) Date de publication et mention
de la délivrance du brevet:
**08.12.2021 Bulletin 2021/49**

(21) Numéro de dépôt: **18822058.6**

(22) Date de dépôt: **18.12.2018**

(51) Int Cl.:
*F01N 3/20* *(2006.01)*    *B60K 13/04* *(2006.01)*
*B60K 15/03* *(2006.01)*

(86) Numéro de dépôt international:
**PCT/EP2018/085675**

(87) Numéro de publication internationale:
**WO 2019/121802 (27.06.2019 Gazette 2019/26)**

(54) **SYSTÈME DE STOCKAGE DE LIQUIDE POUR VÉHICULE**

FLÜSSIGKEITSSPEICHERSYSTEM FÜR EIN FAHRZEUG

LIQUID STORAGE SYSTEM FOR A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2017 FR 1763114**

(43) Date de publication de la demande:
**28.10.2020 Bulletin 2020/44**

(73) Titulaire: **Plastic Omnium Advanced Innovation
And Research
1130 Bruxelles (BE)**

(72) Inventeurs:
• **LEONARD, Stéphane
1090 BRUXELLES (BE)**
• **DUEZ, Laurent
1180 UCCLE (BE)**

(74) Mandataire: **LLR
11 boulevard de Sébastopol
75001 Paris (FR)**

(56) Documents cités:
**WO-A1-2013/174986    WO-A2-2010/119116
DE-A1-102007 050 272    DE-A1-102015 205 499**

**Description**

La présente invention concerne le domaine technique des réservoirs configurés pour contenir un liquide.

Plus particulièrement, l'invention concerne un système de stockage de liquide pour véhicule, en particulier automobile, ainsi qu'un procédé de fonctionnement d'un tel système de stockage de liquide.

Les véhicules à moteur sont généralement équipés de systèmes de stockage de liquide, comme par exemple des réservoirs à carburant ou des réservoirs configurés pour contenir une solution aqueuse. Ces derniers peuvent par exemple contenir de l'eau, éventuellement déminéralisée, pour une injection possible d'eau dans la chambre de combustion du moteur. Pour la réduction catalytique sélective - ou SCR -, de tels systèmes de stockage peuvent encore contenir une solution aqueuse d'urée pour une utilisation dans des systèmes SCR, par exemple pour le post-traitement des gaz d'échappement d'un moteur à combustion interne pour la réduction d'oxydes d'azote.

Par exemple, le document WO 2010119116 A2 divulgue un système de stockage d'une solution d'additif, comprenant au moins un réservoir de stockage de l'additif doté d'un compartiment principal et d'un compartiment secondaire, une pompe et au moins deux points d'aspiration, l'un étant actif uniquement lorsque la pompe fonctionne dans un mode d'injection depuis le compartiment principal, l'autre étant actif uniquement lorsque la pompe fonctionne dans un mode de soutirage du compartiment secondaire vers le compartiment principal.

Ces systèmes de stockage sont en général prévus avec des composants et/ou avec un module de distribution comprenant des accessoires.

En particulier, ces systèmes de stockage sont prévus avec un capteur de niveau de type jauge à flotteur, comme par exemple dans le document US2010070061A1.

Cependant, comme notamment mentionné dans ce document, la mesure du niveau peut être affectée par les conditions de roulage du véhicule, de même que la distribution de liquide, par exemple selon une pente et/ou une accélération du véhicule, lesquelles peuvent fortement impacter la mesure du niveau et la distribution de liquide.

Il est également connu de disposer dans ces systèmes de stockage un pot stabilisateur - swirl pot en langue anglaise - destiné à permettre le maintien de la distribution de liquide au moins pendant une période prédéterminée lorsque le liquide dans le système de stockage est soumis à de telles conditions et se déplace dans celui-ci. Le liquide est ainsi pompé par une pompe d'alimentation depuis ce pot stabilisateur, permettant de pomper du liquide même dans les conditions de roulage précitées.

Il se trouve que le fait que le capteur de niveau se trouve à côté du pot stabilisateur impose notamment des contraintes d'assemblage et de géométrie du système de stockage et du pot stabilisateur. En particulier dans le cas d'une jauge à flotteur, un espace doit être prévu dans le système de stockage pour le déplacement du flotteur et du bras du capteur de niveau, ce qui peut limiter en outre le volume du pot stabilisateur du fait des contraintes géométriques. Par ailleurs, l'assemblage d'un tel système de stockage est complexe, du fait de contraintes de positionnement du capteur de niveau en outre du montage du pot stabilisateur.

Ainsi, la présente invention a notamment pour but de simplifier l'assemblage d'un système de stockage de liquide pour véhicule.

Afin d'atteindre cet objectif, l'invention a notamment pour objet un système de stockage de liquide pour véhicule, comportant

un compartiment principal ;
un compartiment secondaire, dont la partie supérieure comporte une ouverture débouchant sur le compartiment principal, dite ouverture supérieure, le compartiment secondaire comprenant :

- une sortie pour une pompe d'alimentation raccordée pour pomper le liquide depuis le compartiment secondaire vers une sortie de la pompe d'alimentation ;
- un capteur de niveau configuré pour mesurer un niveau de liquide ;
- une pompe, comportant une entrée de pompage du liquide depuis le compartiment principal et une sortie qui délivre du liquide au compartiment secondaire,
- des moyens de raccordement fluidique entre le compartiment principal et le compartiment secondaire, permettant l'écoulement libre du liquide entre les deux compartiments ;

les moyens de raccordement fluidique étant raccordés au compartiment secondaire sur une paroi de celui-ci, à un niveau inférieur à celui de l'ouverture supérieure.

Ainsi, on propose de monter le capteur de niveau sur le compartiment secondaire, et non plus dans le compartiment principal à côté du compartiment secondaire, de façon à assembler le système de stockage de manière plus simple. On propose en effet un système de stockage de liquide particulièrement simple à assembler car on concentre plusieurs fonctionnalités dans le compartiment secondaire, avantageusement dans un même module présent dans ce compartiment secondaire, ce qui demande moins d'opérations complexes d'assemblage telles que le positionnement ou le raccordement.

De plus, le compartiment secondaire peut présenter davantage de possibilités géométriques et contenir un volume plus important. Le compartiment principal, libéré de l'agencement du capteur de niveau, offre également davantage de liberté géométrique.

On comprend que la pompe, en fonctionnement, permet avantageusement d'alimenter le compartiment secondaire de manière continue en liquide, ce qui permet de maintenir une distribution de liquide via la pompe d'alimentation, même dans des conditions de roulage particulières dans lesquelles le niveau de liquide varie selon les zones du système de stockage, comme une pente ou une accélération du véhicule.

On comprend par ailleurs que les moyens de raccordement fluidique permettent au capteur de niveau de mesurer le niveau de liquide dans le compartiment principal, bien qu'étant disposé dans le compartiment secondaire. En effet grâce à ces moyens, le capteur de niveau est apte à mesurer un niveau du fluide satisfaisant lorsque la pompe est à l'arrêt. En effet lorsque la pompe est arrêtée, du fait des moyens de raccordement fluidique permettant l'écoulement libre du liquide entre les deux compartiments, le liquide peut s'écouler par exemple depuis le second compartiment vers le premier compartiment dans le cas où le niveau de liquide du premier compartiment est inférieur à celui du second compartiment, jusqu'à permettre un équilibrage des niveaux de liquide entre les deux compartiments. Cet équilibrage peut être total dans le cas où le niveau des deux compartiments est identique à l'état équilibré et se trouve au-dessus du niveau des moyens de raccordement fluidique. Cet équilibrage peut être partiel, au moins jusqu'à ce que le niveau d'un des deux compartiments se trouve au niveau des moyens de raccordement fluidique, le niveau de l'autre compartiment se trouvant alors au-dessous du niveau des moyens de raccordement fluidique. Ainsi, les moyens de raccordement fluidique peuvent avantageusement permettre un équilibrage des hauteurs de liquide entre les deux compartiments, et par conséquent la mesure du niveau dans le compartiment secondaire permet d'estimer une mesure du niveau dans le compartiment principal.

Par « permettant l'écoulement libre du liquide », on comprend que les moyens de raccordement fluidique ne sont notamment pas directement raccordés à une pompe se trouvant dans l'un ou l'autre des compartiments.

Par « système de stockage de liquide » on entend désigner tout système pour une matière liquide de nature quelconque qui se trouve à l'état liquide à une température de fonctionnement normal du véhicule, par exemple entre 5°C et 25°C. Il est notamment compris que le liquide peut se trouver à l'état gelé à basse température dans le système de stockage de liquide, par exemple à une température inférieure à 0°C.

L'invention peut en outre comporter l'une ou plusieurs des caractéristiques suivantes, prises seules ou en combinaison.

- Selon un premier mode de réalisation, la pompe est une pompe à jet, comportant en outre une entrée de liquide depuis une branche de la sortie de la pompe d'alimentation formant dérivation. Cette entrée de liquide sous pression permet avantageusement d'aspirer du liquide depuis l'entrée de pompage de liquide depuis le compartiment principal. Ainsi, il n'est pas nécessaire de prévoir un entraînement électrique spécifique, comme par exemple un moteur, pour la pompe à jet.
- Selon un second mode de réalisation, la pompe est la pompe d'alimentation, comportant en outre une entrée de pompage du liquide depuis le compartiment secondaire. Cela permet de simplifier la conception du système de stockage.
- Le compartiment secondaire forme un pot stabilisateur dans le compartiment principal.
- Les moyens de raccordement fluidique comprennent un orifice ménagé dans une paroi du compartiment secondaire. Cette configuration est particulièrement simple et économique.
- Les moyens de raccordement fluidique comprennent une pluralité d'orifices, de préférence placés sensiblement à la même hauteur. Le débit de liquide passant par les orifices est ainsi moins sensible aux conditions de roulage comme par exemple des accélérations ou des virages, et est par ailleurs moins sensible au bouchage en cas de gel partiel du liquide ou d'impuretés présentes dans le liquide.
- Les moyens de raccordement fluidique sont formés à une hauteur située entre 0% et 95% de la hauteur totale du compartiment secondaire. De préférence, les moyens de raccordement fluidique sont formés à une hauteur située entre 20% et 40% de la hauteur totale du compartiment secondaire. Cela permet de réaliser une estimation acceptable du niveau de liquide tout en maintenant un niveau de liquide minimal dans le compartiment secondaire. En effet, si l'orifice par exemple est placé trop haut, la mesure réalisée ne permet pas une estimation proche du niveau de liquide dans le compartiment principal ; si l'orifice est placé trop bas, on peut ne pas disposer d'un niveau de liquide suffisant dans le compartiment secondaire pour assurer un pompage, par exemple lors d'un redémarrage du véhicule et de la pompe. Le raisonnement est bien entendu le même dans le cas où le système comporte une pluralité d'orifices formant les moyens de raccordement fluidiques.
- Le capteur de niveau est un capteur de niveau à ultrasons. L'utilisation d'un tel capteur est particulièrement intéressante car celui-ci est compact et ne comporte pas d'élément faisant saillie hors du compartiment secondaire, celui-ci pouvant en outre détecter la surface libre de liquide éventuellement au-dessus du compartiment secondaire à travers l'ouverture supérieure. De plus, un tel capteur n'est pas endommagé lorsque le liquide se trouve à l'état gelé, contrairement un capteur de niveau à bras de levier et flotteur.

- Le compartiment secondaire possède un volume interne configuré pour recevoir un volume de liquide compris entre 0,3 et 1 litre, de préférence entre 0,5 et 1 litre. Il s'agit d'un volume optimal de réserve, notamment lorsque le compartiment secondaire forme un pot stabilisateur.
- Le compartiment secondaire comporte un élément chauffant configuré pour chauffer le liquide. L'utilisation d'un tel élément chauffant est particulièrement avantageuse dans le cas où le liquide est susceptible de geler sur au moins une partie de la plage de températures de fonctionnement du véhicule.
- Le liquide est une solution aqueuse, en particulier de l'eau ou une solution aqueuse d'urée. Le dispositif est particulièrement adapté pour recevoir une solution aqueuse susceptible de geler sur au moins une partie de la plage de températures de fonctionnement du véhicule.

L'invention concerne également un procédé de fonctionnement d'un système de stockage de liquide tel que décrit précédemment, comprenant les étapes suivantes :

- lorsque la pompe d'alimentation est à l'arrêt depuis une période de temps prédéterminée, mesure d'un niveau de liquide au moyen du capteur de niveau,
- en-dessous d'un seuil prédéterminé de niveau, émission d'un avertissement indiquant que le compartiment principal doit être rechargé en liquide.

Ainsi, on évite de se trouver dans un cas dans lequel le niveau du compartiment secondaire ne reflète pas le niveau du compartiment principal en raison d'une accélération, d'un virage ou du fonctionnement de la pompe, laquelle peut permettre d'augmenter le niveau de liquide dans le compartiment secondaire au-dessus du niveau de liquide dans le compartiment principal.

Le procédé peut en outre comporter la caractéristique selon laquelle le seuil prédéterminé de niveau est au moins égal, en particulier égal, au niveau le plus bas des moyens de raccordement fluidique. Ainsi, l'estimation de la mesure réalisée par le capteur de niveau peut ne pas être représentative du niveau réel de liquide dans le compartiment principal lorsque le niveau de liquide est inférieur au niveau des moyens de raccordement fluidique. Dans ce cas, celle-ci n'induit pas un utilisateur en erreur quant à la quantité de liquide restant dans le réservoir, du fait qu'un avertissement est émis.

L'invention sera mieux comprise à la lecture de la description qui va suivre, donnée uniquement à titre d'exemple et faite en se référant aux dessins dans lesquels :

- la figure 1 est une vue schématique en coupe d'un système de stockage de liquide selon un premier mode de réalisation ;
- la figure 2 est une vue schématique en coupe d'un système de stockage de liquide selon un second mode de réalisation ;
- la figure 3 est une vue schématique partielle en perspective d'un exemple de compartiment secondaire selon un mode de réalisation ;
- la figure 4 est une succession de vues schématiques partielles représentant différentes étapes de fonctionnement d'un système de stockage de liquide selon l'invention.

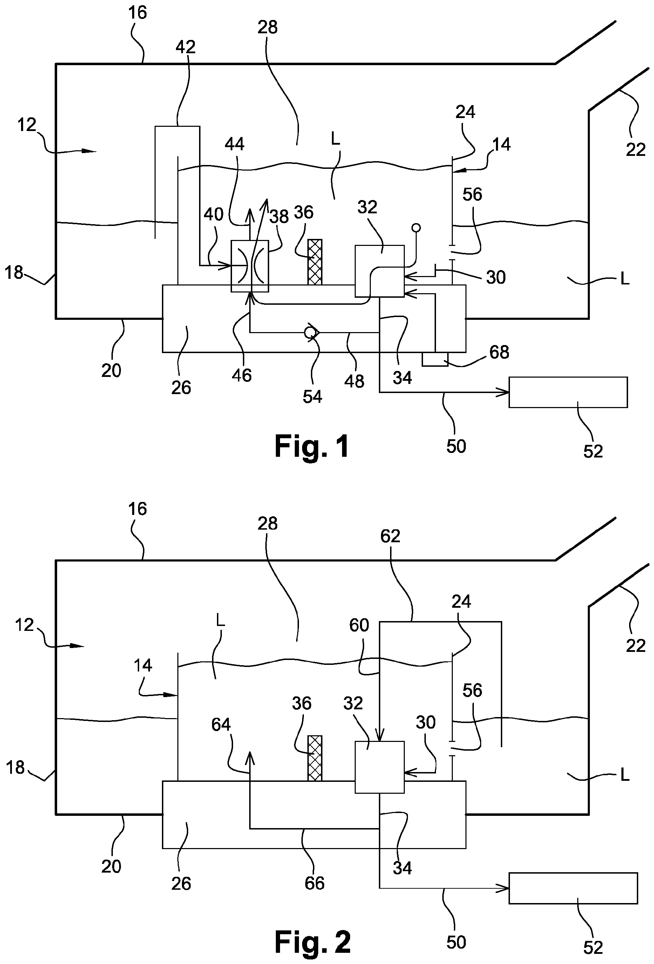

Un système de stockage de liquide 10 pour véhicule tel qu'illustré sur la figure 1 comprend un compartiment principal 12 et un compartiment secondaire 14.

Le compartiment principal 12 comprend typiquement une paroi supérieure 16, des parois latérales 18 et une paroi formant fond 20. Il est configuré pour recevoir du liquide L, lequel peut par exemple être de l'eau éventuellement déminéralisée, une solution aqueuse d'urée, du carburant, comme par exemple du diesel, de l'essence ou du kérozène. Un exemple d'une telle solution aqueuse d'urée est commercialisé sous la marque Adblue®. Elle contient typiquement environ 32,5% en poids d'urée à haute pureté (numéro CAS 57-13-6) et environ 67,5% en poids d'eau déminéralisée. Par l'expression « eau déminéralisée », on comprend généralement une solution d'eau déionisée ayant une conductivité inférieure ou égale à 1,0 μS/cm à 25°C conformément à la norme ISO 3696:1987. Le compartiment principal 12 comprend également un tube de remplissage 22, permettant à un utilisateur de remplir le compartiment principal 12 en liquide L.

Le compartiment secondaire 14 comprend typiquement une paroi latérale 24 et un fond 26. Le compartiment secondaire 14 possède un volume interne pouvant être configuré pour recevoir un volume de liquide L compris entre 0,3 et 1 litre, de préférence entre 0,5 et 1 litre. La partie supérieure du compartiment 14 comporte une ouverture, dite ouverture supérieure 28, débouchant sur le compartiment principal 12. Dans l'exemple illustré sur les figures, le compartiment 14 forme un pot stabilisateur dans le compartiment principal 12, de préférence au fond du compartiment principal 12. Ainsi, le compartiment secondaire 14 peut être placé partiellement ou totalement dans le compartiment principal 12, ce qui rend le système de stockage plus compact. Le compartiment secondaire 14 comprend une sortie 30 pour une pompe d'alimentation 32 raccordée pour pomper le liquide L depuis le compartiment secondaire 14 vers une sortie 34 de la pompe d'alimentation 32. La sortie 30 forme ainsi une entrée de pompage pour la pompe d'alimentation 32.

Le compartiment secondaire 14 comprend également un capteur de niveau 36, par exemple un capteur de niveau à ultrasons. En particulier, le capteur de niveau 36 peut être placé au fond 26 du compartiment secondaire 14, au droit de l'ouverture supérieure 28, ce qui peut lui permettre de réaliser des mesures de niveau pour du liquide L se trouvant au-dessus de l'ouverture supérieure 28, dans le compartiment principal 12.

Dans le cas où le système de stockage de liquide est configuré pour recevoir un liquide susceptible de geler, comme de l'eau éventuellement déminéralisée ou une solution d'urée, le compartiment secondaire 14 peut comporter un élément chauffant configuré pour chauffer le liquide L afin de le maintenir à l'état liquide et/ou de refaire passer à l'état liquide le liquide L qui est gelé et se trouve sous forme solide. L'élément chauffant peut en particulier être électrique et/ou hydraulique, et peut en outre être flexible, ce qui simplifie son montage dans le compartiment secondaire 14.

Le compartiment secondaire 14 comprend en outre une pompe. En fonctionnement, la pompe sert à alimenter en liquide L le compartiment secondaire 14 depuis le compartiment principal 12.

La pompe est formée dans un premier mode de réalisation illustré sur la figure 1 par une pompe à jet 38. La pompe à jet 38 comporte une entrée d'aspiration formée par une entrée 40 de pompage de liquide depuis le compartiment principal 12, par exemple via un conduit d'aspiration 42. La pompe à jet 38 comporte une sortie d'éjection formée par une sortie 44 qui délivre du liquide au compartiment secondaire 14. La pompe à jet 38 comporte en outre une entrée de pressurisation formée par une entrée de liquide 46, laquelle est raccordée à un conduit de pressurisation formé par une branche 48 de la sortie 34 de la pompe d'alimentation, la branche 48 formant une dérivation. Ainsi, le liquide L s'écoule depuis l'entrée 40 de pompage de liquide et/ou l'entrée de liquide 46 vers la sortie 44. Une seconde branche, dite branche de sortie 50, de la sortie 34 forme un conduit de sortie du système de stockage de liquide, par exemple en direction d'un injecteur 52. Eventuellement, la branche 48 formant dérivation peut comporter un clapet anti-retour 54, lequel empêche le passage du liquide L depuis la pompe à jet 38 vers la sortie 34 et/ou vers la branche de sortie 50.

Enfin, le compartiment secondaire 14 comprend des moyens de raccordement fluidique entre le compartiment principal 12 et le compartiment secondaire 14, permettant l'écoulement libre du liquide entre les deux compartiments. Les moyens de raccordement fluidiques sont par exemple formés par un orifice 56, lequel est par exemple ménagé sur la paroi latérale 24 du compartiment secondaire 14, à un niveau inférieur à celui de l'ouverture supérieure 28. L'orifice 56 est par exemple ménagé à une hauteur située entre 0% et 95% de la hauteur totale du compartiment secondaire 14, de préférence à une hauteur située entre 20% et 40% de la hauteur totale du compartiment secondaire 14. La sortie 30 pour la pompe d'alimentation 32 peut être placée à un niveau inférieur à celui de l'orifice 56 pour permettre d'alimenter la pompe d'alimentation 32 lors de son démarrage si le niveau de liquide L dans le compartiment secondaire est bas et correspond au niveau de l'orifice 56. Ce peut être par exemple le cas lorsque, avant démarrage de la pompe d'alimentation 32, le niveau dans le compartiment principal est inférieur ou égal au niveau de l'orifice 56.

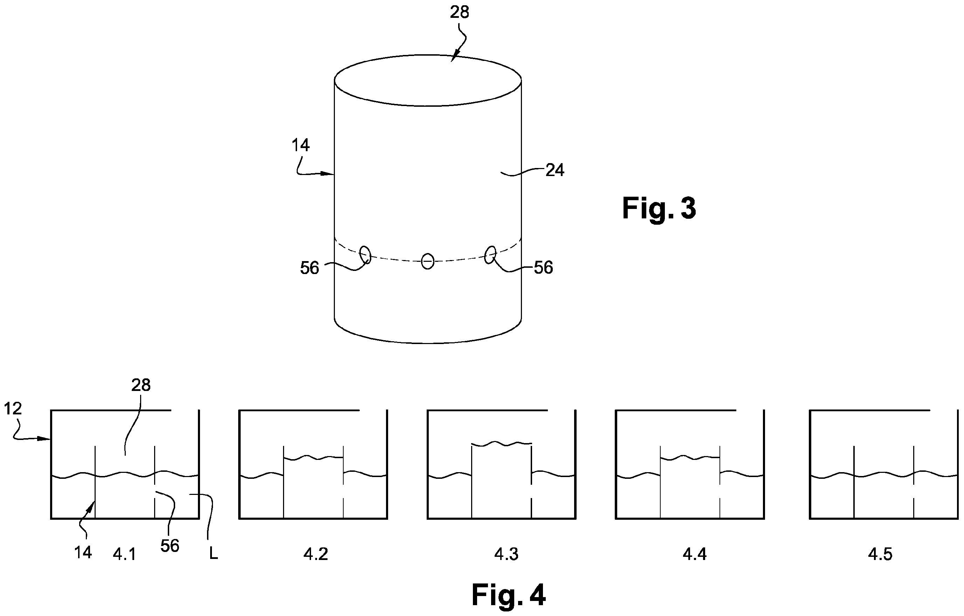

Ainsi, lorsque la pompe d'alimentation 32 est en fonctionnement, la pompe à jet 38 est alimentée. Le débit d'aspiration de liquide L via le conduit 42 et l'entrée 40 dépasse le débit de liquide L en direction de l'injecteur 52 via la sortie 34 et la branche de sortie 50. Il est à noter que le débit d'aspiration de liquide L via le conduit 42 et l'entrée 40 dépasse également la somme du débit de liquide L en direction de l'injecteur 52 et du débit de liquide s'écoulant librement à travers l'orifice 56. Par conséquent, le niveau de liquide dans le compartiment secondaire 14 augmente, comme illustré sur la figure 4 à l'étape 4.2. Lorsque celui-ci atteint le sommet du compartiment secondaire 14 et l'ouverture supérieure 28, le liquide déborde par cette ouverture supérieure 28 et retourne dans le compartiment principal 12, comme illustré sur la figure 4 à l'étape 4.3. Le fonctionnement peut être similaire par exemple dans le cas où le niveau de liquide dans le compartiment principal 12 dépasse le niveau de l'ouverture supérieure 28 du compartiment secondaire 14. Dans ce cas, lorsque la pompe à jet 38 est alimentée, du liquide L passe du compartiment secondaire 14 au compartiment principal 12 via l'ouverture supérieure 28.

Lorsque la pompe d'alimentation 32 est arrêtée, la pompe à jet 38 est arrêtée. Le débit de liquide L passant par l'orifice 56 permet d'équilibrer, ou bien de rapprocher dans le cas où le niveau du réservoir se trouverait au-dessous du niveau de l'orifice 56, les niveaux de liquide L dans le compartiment secondaire 14 et dans le compartiment principal 12. Ainsi par exemple, comme illustré sur la figure 4 à l'étape 4.4, le niveau de liquide L peut diminuer dans le compartiment secondaire 14 par passage du liquide L à travers l'orifice 56 en direction du compartiment principal. A l'état final, après une période de temps prédéterminée, les niveaux de liquide L dans les deux compartiments peuvent être équilibrés, comme illustré sur la figure 4 à l'étape 4.5. Le capteur de niveau 36 peut alors mesurer le niveau de liquide L et estimer la quantité de liquide présent dans le système de stockage de liquide.

Le débit de liquide V passant à travers l'orifice 56 est calculé à partir de l'équation suivante, conformément au principe de Bernoulli :

$$V = a.\sqrt{2gh}$$

dans laquelle :

V est le débit en $m^3.s^{-1}$ ;
a est la surface de l'orifice en $m^2$ ;
g est l'accélération due à la pesanteur en $m.s^{-2}$ ;
h est la hauteur de liquide au-dessus de l'orifice en m.

Ainsi, la durée $\Delta t$ nécessaire pour vider le compartiment secondaire uniquement par l'orifice 56 est calculée à partir de l'équation suivante, conformément à la loi de Torricelli :

$$\Delta t = \frac{2A}{a.\sqrt{2g}} \cdot (\sqrt{h_1} - \sqrt{h_2})$$

dans laquelle :

$\Delta t$ est la durée en s ;
A est la surface horizontale libre du compartiment secondaire en $m^2$ ;
a est la surface de l'orifice en $m^2$ ;
g est l'accélération due à la pesanteur en $m.s^{-2}$ ;
$h_1$ est la hauteur du compartiment secondaire en m ;
$h_2$ est la hauteur de l'orifice en m.

Par exemple, en considérant une hauteur $h_1$ de compartiment secondaire 14 de 80 mm, une hauteur de l'orifice 56 de 16 mm, l'orifice 56 étant ainsi ménagé à 20% de la hauteur du compartiment secondaire 14, un diamètre équivalent de l'ouverture supérieure 28 du compartiment secondaire 14 de 100 mm et un volume du compartiment secondaire de 500 ml, le tableau suivant illustre les débits obtenus à travers l'orifice 56 ainsi que la durée nécessaire pour vider le compartiment secondaire, en fonction du diamètre de l'orifice 56.

*Tableau 1 - Débit et durée en fonction du diamètre de l'orifice*

| Diamètre de l'orifice | Débit à travers l'orifice | | Durée pour vider le compartiment |
|---|---|---|---|
| mm | kg/h | g/s | s |
| 4.8 | 74 | 20.6 | 30 |
| 4 | 50 | 13.9 | 44 |
| 3 | 28.5 | 7.9 | 78 |
| 2 | 12.7 | 3.5 | 176 |

Cependant, le diamètre de l'orifice 56 ne doit avantageusement pas être trop important, car le débit à fournir en fonctionnement en sortie 44 de la pompe à jet 38 serait alors trop élevé à cause de l'écoulement libre élevé du liquide à travers l'orifice 56. Cela pourrait ainsi entraîner un surdimensionnement de la pompe à jet 38, éventuellement de la pompe d'alimentation 32, et une consommation d'énergie importante.

Ainsi, par exemple, un diamètre de l'orifice 56 peut être choisi égal à 4 mm, lequel peut permettre d'équilibrer les niveaux de liquide L entre le compartiment principal 12 et le compartiment secondaire 14 en moins d'une minute. Cela peut permettre au capteur de niveau 36 de réaliser une mesure relativement rapidement après l'arrêt de la pompe à jet 38, tout en réalisant une consommation d'énergie raisonnable.

Dans un second mode de réalisation illustré sur la figure 2, la pompe est formée par la pompe d'alimentation 32. Le second mode de réalisation se distingue ainsi du premier mode de réalisation notamment en ce qu'il peut ne pas comporter de pompe à jet 38 et les différents conduits y menant 42, 48 ainsi que les entrées 40 et 46 et la sortie 44. Selon ce second mode de réalisation, la pompe d'alimentation 32 comporte en outre une entrée de liquide 60 depuis le compartiment principal 12, par exemple via un conduit d'aspiration 62. La sortie 34 de la pompe d'alimentation 32 comprend une sortie de liquide 64 débouchant dans le compartiment secondaire 14, laquelle est raccordée à un conduit formé par une branche 66 de la sortie 34 de la pompe d'alimentation, la branche 66 formant une dérivation. Des vannes ou des clapets anti-retour peuvent en outre être prévus pour sélectivement libérer, limiter ou bloquer le passage du liquide dans les différents conduits.

Sur les figures 1 et 2, le compartiment secondaire 14 est illustré avec un orifice 56. Néanmoins, il est envisageable que les moyens de raccordement fluidiques des figures 1 et 2 comprennent non pas un orifice 56 mais une pluralité d'orifices 56, de préférence placés sensiblement à la même hauteur, comme cela est visible sur la figure 3. Ces orifices 56 sont par exemple ménagés sur une paroi latérale 24 du compartiment secondaire 14. De préférence, les orifices 56 sont répartis régulièrement sur la paroi latérale 24 du compartiment secondaire 14. Dans le cas où le compartiment secondaire 14 possède une paroi latérale 24 sensiblement cylindrique, comme illustré sur la figure 3, les orifices 56 peuvent être placés sensiblement à la même hauteur et posséder un écart angulaire sensiblement identique avec les orifices 56 adjacents. Cela permet d'optimiser le drainage du compartiment secondaire 14, le compartiment secondaire 14 ne se vidant pas trop rapidement, par exemple dans le cas où le véhicule est soumis à une forte accélération dans une direction. Du fait que les orifices 56 sont régulièrement répartis, seule une partie d'entre eux peut être négativement impactée par une telle accélération qui provoque une augmentation du débit de liquide dans une partie de ces orifices 56. Les autres orifices 56 peuvent ainsi voir leur débit respectif inchangé, voire diminué, en raison d'une telle accélération.

Dans les modes de réalisation illustrés sur les figures, le compartiment principal 12 et le compartiment secondaire 14 ainsi que les différents conduits peuvent comprendre ou être constitués d'un matériau plastique, en particulier en polyéthylène. Ils peuvent être réalisés par moulage par injection ou par extrusion.

Un procédé de fabrication et d'assemblage du système de stockage de liquide, puis de montage sur un véhicule, est décrit ci-après, à titre d'exemple non limitatif. Les étapes peuvent suivre un ordre différent.

- Réalisation du compartiment principal 12 ;
- Réalisation du compartiment secondaire 14 ;
- Montage de la pompe d'alimentation 32, du capteur de niveau 36, éventuellement de la pompe à jet 38 et/ou de l'élément chauffant, dans le compartiment secondaire ;
- Assemblage du compartiment principal 12 et du compartiment secondaire 14, par exemple par insertion puis solidarisation, par exemple par vissage ou soudage, du compartiment secondaire 14 dans une ouverture du compartiment principal 12 ;
- Montage du système de stockage de liquide sur un véhicule ;
- Raccordement du système de stockage à un injecteur 52.

Un procédé de fonctionnement du système de stockage de liquide est décrit ci-après, à titre d'exemple non limitatif. Les étapes peuvent suivre un ordre différent.

- Lorsque la pompe d'alimentation 32 est à l'arrêt depuis une période de temps prédéterminée, par exemple 1 minute, mesure d'un niveau de liquide au moyen du capteur de niveau 36 ;
- En-dessous d'un seuil prédéterminé de niveau, émission d'un avertissement indiquant que le compartiment principal 12 doit être rechargé en liquide.

Le seuil prédéterminé de niveau peut être au moins égal, en particulier égal, au niveau le plus bas des moyens de raccordement fluidique, par exemple de l'orifice 56.

La pompe d'alimentation 32 peut être commandée par un dispositif de commande 68, lequel peut par exemple être disposé sur le fond 26 du compartiment secondaire 14, comme illustré sur la figure 1. Ce dispositif de commande peut alternativement être disposé à distance du compartiment secondaire 14, voire du système de stockage de liquide. Le dispositif de commande 68 peut également commander le capteur de niveau 36, éventuellement la ou les vannes, ainsi que l'émission de l'avertissement.

Il est aussi possible de ménager le ou les orifices 56 dans le fond du compartiment secondaire 14.

L'alimentation de la pompe à jet 38 pourrait être stoppée par l'intermédiaire d'une vanne si le niveau détecté est égal, voire au moins égal, à un niveau inférieur d'une valeur prédéterminée, par exemple une valeur comprise entre 0 et 15 mm, de préférence entre 5 et 10 mm, au niveau de l'ouverture supérieure 28. Cela éviterait ainsi par exemple de faire fonctionner la pompe à jet dans le cas où le niveau de liquide se trouve au-dessus du niveau de l'ouverture supérieure 28, le compartiment secondaire 28 étant alors alimenté par l'écoulement libre du liquide depuis le compartiment principal 12 vers le compartiment secondaire 14 via l'ouverture supérieure 28. Cela permet une économie d'énergie.

**Revendications**

1. Système de stockage de liquide pour véhicule, comportant

   un compartiment principal (12) ;
   un compartiment secondaire (14), dont la partie supérieure comporte une ouverture débouchant sur le compartiment principal (12), dite ouverture supérieure (28), le compartiment secondaire (14) comprenant :

   - une sortie (30) pour une pompe d'alimentation (32) raccordée pour pomper le liquide (L) depuis le compartiment secondaire (14) vers une sortie (34) de la pompe d'alimentation (32) ;
   - une pompe, comportant une entrée (40, 60) de pompage du liquide (L) depuis le compartiment principal (12) et une sortie (44, 64) qui délivre du liquide (L) au compartiment secondaire (14) ;

   **caractérisé en ce que** le compartiment secondaire (14) comprend :

   - un capteur de niveau (36) configuré pour mesurer un niveau de liquide (L) ;
   - des moyens de raccordement fluidique entre le compartiment principal (12) et le compartiment secondaire (14), permettant l'écoulement libre du liquide (L) entre les deux compartiments (12, 14) ;

   les moyens de raccordement fluidique étant raccordés au compartiment secondaire (14) sur une paroi (14) de celui-ci, à un niveau inférieur à celui de l'ouverture supérieure (28).

2. Système de stockage de liquide selon la revendication 1, dans lequel la pompe est une pompe à jet (38), comportant en outre une entrée (46) de liquide (L) depuis une branche (48) de la sortie (34) de la pompe d'alimentation formant dérivation.

3. Système de stockage de liquide selon la revendication 1, dans lequel la pompe est la pompe d'alimentation (32), comportant en outre une entrée de pompage (60) depuis le compartiment principal.

4. Système de stockage de liquide selon l'une quelconque des revendications précédentes, dans lequel le compartiment secondaire (14) forme un pot stabilisateur dans le compartiment principal (12).

5. Système de stockage de liquide selon l'une quelconque des revendications précédentes, dans lequel les moyens de raccordement fluidique comprennent un orifice (56) ménagé dans une paroi (24) du compartiment secondaire (14).

6. Système de stockage de liquide selon l'une quelconque des revendications précédentes, dans lequel les moyens de raccordement fluidique comprennent une pluralité d'orifices (56), de préférence placés sensiblement à la même hauteur.

7. Système de stockage de liquide selon l'une quelconque des revendications précédentes, dans lequel les moyens de raccordement fluidique sont formés à une hauteur située entre 0% et 95% de la hauteur totale du compartiment secondaire (14), de préférence à une hauteur située entre 20% et 40% de la hauteur totale du compartiment secondaire (14).

8. Système de stockage de liquide selon l'une quelconque des revendications précédentes, dans lequel le capteur de niveau (36) est un capteur de niveau à ultrasons.

9. Système de stockage de liquide selon l'une quelconque des revendications précédentes, dans lequel le compartiment secondaire (14) possède un volume interne configuré pour recevoir un volume de liquide (L) compris entre 0,3 et 1 litre, de préférence entre 0,5 et 1 litre.

10. Système de stockage de liquide selon l'une quelconque des revendications précédentes, dans lequel le compartiment secondaire (14) comporte un élément chauffant configuré pour chauffer le liquide (L).

11. Système de stockage de liquide selon l'une quelconque des revendications précédentes, dans lequel le liquide (L) est une solution aqueuse, en particulier de l'eau ou une solution aqueuse d'urée.

12. Procédé de fonctionnement d'un système de stockage de liquide selon l'une quelconque des revendications précédentes, comprenant les étapes suivantes :

- lorsque la pompe d'alimentation (32) est à l'arrêt depuis une période de temps prédéterminée, mesure d'un niveau de liquide (L) au moyen du capteur de niveau (36),
- en-dessous d'un seuil prédéterminé de niveau, émission d'un avertissement indiquant que le compartiment principal (12) doit être rechargé en liquide (L).

**13.** Procédé de fonctionnement d'un système de stockage de liquide selon la revendication précédente, dans lequel le seuil prédéterminé de niveau est au moins égal, en particulier égal, au niveau le plus bas des moyens de raccordement fluidique.

**Patentansprüche**

**1.** Flüssigkeitsspeichersystem für Fahrzeug, mit einem Hauptraum (12);

einem Nebenraum (14), dessen oberer Teil eine Öffnung aufweist, die an dem Hauptraum (12) ausmündet, so genannte obere Öffnung (28), wobei der Nebenraum (14) umfasst:

- einen Auslass (30) für eine Förderpumpe (32), die angeschlossen ist, um die Flüssigkeit (L) aus dem Nebenraum (14) zu einem Auslass (34) der Förderpumpe (32) hin zu pumpen;
- eine Pumpe mit einem Einlass (40, 60) für das Pumpen von Flüssigkeit (L) aus dem Hauptraum (12) und einem Auslass (44, 64), der Flüssigkeit (L) dem Nebenraum (14) zuführt;

**dadurch gekennzeichnet, dass** der Nebenraum (14) umfasst:

- einen Pegelsensor (36), der ausgelegt ist, um einen Pegel der Flüssigkeit (L) zu messen;
- Mittel für die Strömungsverbindung zwischen dem Hauptraum (12) und dem Nebenraum (14), die den freien Fluss von Flüssigkeit (L) zwischen den zwei Räumen (12; 14) gestatten;

wobei die Mittel für die Strömungsverbindung an den Nebenraum (14) an einer Wand (24) dieses letzten angeschlossen sind, in einer geringeren Höhe als die der oberen Öffnung (28) .

**2.** Flüssigkeitsspeichersystem nach Anspruch 1, wobei die Pumpe eine Strahlpumpe (38) ist, die ferner einen Auslass (46) für Flüssigkeit (L) aus einem Strang (48) des Auslasses (34) der Förderpumpe aufweist, der einen Bypass bildet.

**3.** Flüssigkeitsspeichersystem nach Anspruch 1, wobei die Pumpe die Förderpumpe (32) ist, die ferner einen Einlass für das Pumpen (60) aus dem Hauptraum aufweist.

**4.** Flüssigkeitsspeichersystem nach einem der vorhergehenden Ansprüche, wobei der Nebenraum (14) eine Stabilisierungswanne in dem Hauptraum (12) bildet.

**5.** Flüssigkeitsspeichersystem nach einem der vorhergehenden Ansprüche, wobei die Mittel für die Strömungsverbindung eine Öffnung (56) umfassen, die in einer Wand (24) des Nebenraums (14) vorgesehen ist.

**6.** Flüssigkeitsspeichersystem nach einem der vorhergehenden Ansprüche, wobei die Mittel für die Strömungsverbindung eine Mehrzahl von Öffnungen (56) umfassen, die vorzugsweise in der gleichen Höhe angeordnet sind.

**7.** Flüssigkeitsspeichersystem nach einem der vorhergehenden Ansprüche, wobei die Mittel für die Strömungsverbindung in einer Höhe gebildet sind, die zwischen 0 % und 95 % der Gesamthöhe des Nebenraums (14) liegt, vorzugsweise in einer Höhe, die zwischen 20 % und 40 % der Gesamthöhe des Nebenraums (14) liegt.

**8.** Flüssigkeitsspeichersystem nach einem der vorhergehenden Ansprüche, wobei der Pegelsensor (36) ein Ultraschallpegelsensor ist.

**9.** Flüssigkeitsspeichersystem nach einem der vorhergehenden Ansprüche, wobei der Nebenraum (14) ein Innenvolumen besitzt, das ausgelegt, um ein Volumen an Flüssigkeit (L), das zwischen 0,3 und 1 Liter, vorzugsweise zwischen 0,5 und 1 Liter, beträgt, aufzunehmen.

**10.** Flüssigkeitsspeichersystem nach einem der vorhergehenden Ansprüche, wobei der Nebenraum (14) ein Heizelement aufweist, das ausgelegt ist, um die Flüssigkeit(L) aufzuheizen.

**11.** Flüssigkeitsspeichersystem nach einem der vorhergehenden Ansprüche, wobei die Flüssigkeit (L) eine wässrige Lösung, vorzugsweise Wasser oder eine wässrige Harnstofflösung, ist.

**12.** Verfahren zum Betreiben eines Flüssigkeitsspeichersystems nach einem der vorhergehenden Ansprüche, das die folgenden Schritte umfasst:

- wenn die Förderpumpe (32) seit einem vorher bestimmten Zeitraum stillsteht, Messen eines Pegels der Flüssigkeit (L) mit Hilfe des Pegelsensors (36),
- unterhalb eines vorher bestimmten Pegelschwellwertes, Ausgeben einer Warnung zur Anzeige, dass der Hauptraum (12) wieder mit Flüssigkeit (L) zu befüllen ist.

**13.** Verfahren zum Betreiben eines Flüssigkeitsspeichersystems nach dem vorhergehenden Anspruch, wobei der vorherbestimmte Pegelschwellwertes mindestens gleich, insbesondere gleich, der geringsten Höhe der Mittel für die Strömungsverbindung ist.

**Claims**

**1.** Liquid storage system for a vehicle, comprising

a main compartment (12);
a secondary compartment (14), the upper part of which having an opening leading to the main compartment (12), said upper opening (28), the secondary compartment (14) comprising:

- an outlet (30) for a feed pump (32) connected to pump liquid (L) from the secondary compartment (14) to an outlet (34) of the feed pump (32);
- a pump, having an inlet (40, 60) for pumping liquid (L) from the main compartment (12) and an outlet (44, 64) which delivers liquid (L) to the secondary compartment (14);

**characterised in that** the secondary compartment (14) comprises:

- a level sensor (36) configured to measure a liquid level (L);
- fluid connection means between the main compartment (12) and the secondary compartment (14), allowing the free flow of liquid (L) between the two compartments (12, 14);

the fluid connection means being connected to the secondary compartment (14) on a wall (24) thereof at a level below that of the top opening (28).

**2.** The liquid storage system according to claim 1, wherein the pump is a jet pump (38), further comprising an inlet (46) for liquid (L) from a branch (48) of the outlet (34) of the feed pump forming a bypass.

**3.** The liquid storage system according to claim 1, wherein the pump is the feed pump (32), further comprising a pumping inlet (60) from the main compartment.

**4.** The liquid storage system according to any one of the preceding claims, wherein the secondary compartment (14) forms a swirl pot in the main compartment (12).

**5.** A liquid storage system according to any one of the preceding claims, wherein the fluid connection means comprises a port (56) provided in a wall (24) of the secondary compartment (14).

**6.** The liquid storage system according to any one of the preceding claims, wherein the fluid connection means comprise a plurality of ports (56), preferably placed substantially at the same height.

**7.** The liquid storage system according to any one of the preceding claims, wherein the fluid connection means are formed at a height between 0% and 95% of the total height of the secondary compartment (14), preferably at a height between 20% and 40% of the total height of the secondary compartment (14).

8. The liquid storage system according to any one of the preceding claims, wherein the level sensor (36) is an ultrasonic level sensor.

9. The liquid storage system according to any one of the preceding claims, wherein the secondary compartment (14) has an internal volume configured to receive a volume of liquid (L) between 0.3 and 1 liter, preferably between 0.5 and 1 liter.

10. The liquid storage system according to any one of the preceding claims, wherein the secondary compartment (14) comprises a heating element configured to heat the liquid (L).

11. The liquid storage system according to any one of the preceding claims, wherein the liquid (L) is an aqueous solution, in particular water or an aqueous urea solution.

12. A method of operating a liquid storage system according to any one of the preceding claims, comprising the following steps:

   - when the feed pump (32) has been stopped for a predetermined period of time, measuring a liquid level (L) with the level sensor (36),
   - below a predetermined level threshold, a warning is issued indicating that the main compartment (12) must be refilled with liquid (L).

13. A method of operating a liquid storage system according to the preceding claim, wherein the predetermined level threshold is at least equal, in particular equal, to the lowest level of the fluid connection means.

**Fig. 1**

**Fig. 2**

**Fig. 3**

**Fig. 4**

EP 3 728 805 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010119116 A2

- US 2010070061 A1

**Littérature non-brevet citée dans la description**

- *CHEMICAL ABSTRACTS,* 57-13-6